Europäisches Patentamt

European Patent Office

Office européen des brevets

(11) Publication number: **0 155 723**
**B1**

## (12) EUROPEAN PATENT SPECIFICATION

(45) Date of publication of patent specification: **07.09.88**

(21) Application number: **85200260.9**

(22) Date of filing: **26.02.85**

(51) Int. Cl.⁴: **A 01 D 75/20**

(54) **Harvesting machine including a disc cutterbar.**

(30) Priority: **02.03.84 US 585674**

(43) Date of publication of application:
**25.09.85 Bulletin 85/39**

(45) Publication of the grant of the patent:
**07.09.88 Bulletin 88/36**

(84) Designated Contracting States:
**DE FR GB**

(56) References cited:
**DE-A-3 104 780**
**DE-U-7 213 537**
**DE-U-7 934 841**

(73) Proprietor: **FORD NEW HOLLAND, INC. (a
Delaware corp.)
500 Diller Avenue
New Holland Pennsylvania 17557 (US)**

(72) Inventor: **McLean, Kenneth W.
344, East Conestoga Street
New Holland, PA. 17557 (US)**

(74) Representative: **Vandenbroucke, Alberic T.J.
FORD NEW HOLLAND N.V. Leon Claeysstraat 3A
B-8210 Zedelgem (BE)**

EP 0 155 723 B1

Courier Press, Leamington Spa, England.

## Description

The present invention relates generally to harvesting machines comprising a disc type cutterbar, such as the harvesting machines of the type commonly referred to as disc mower-conditioners. Typical disc cutterbars are illustrated in US—A—3.507.102, DE—U—7.213.537 and DE—U—7.934.841 while that US—A—4.177.625, US—A—4.656.284 and DE—A—3.104.780 show typical disc mower conditioners.

Such a harvesting machine is provided with a disc cutterbar having a number of transversely spaced rotatable cutter members operable to sever standing crop material by an impact action. When the harvesting machine is a disc mower-conditioner, a conditioning mechanism is mounted rearwardly of the disc cutterbar and is operable to receive and condition severed crop material without the severed crop being deposited upon the ground before it is conditioned. Generally, the disc cutterbar is provided with a flexible curtain extending around at least a portion of the perimeter thereof to permit an unhindered flow of standing crop material thereto while yet to restrain the passage of foreign objects outwardly from the disc cutterbar.

It has been found that under certain conditions, such as the encounter of areas of light crop, the air turbulence created by the rotating disc cutter members and/or the rotating conditioning mechanism, respectively other rotating machine components, can effect a movement of the flexible curtain in the direction toward the disc cutterbar to an undesirable position. A possible solution to this problem has already been proposed in DE—U—7.213.537 and basically consists of the attachment of a plurality of resilient, concavely shaped stiffening members to the inner side of the protective curtain. This proposal is not fully satisfactory mainly because the bending resistance of the stiffening members sharply reduces after an initial bending of said members.

It is the object of the invention to provide a harvesting machine of the type having a disc type cutterbar, eventually in combination with other rotatable machine components and having a flexible curtain extending around at least a portion of the perimeter of the cutterbar, wherein, during operation, deflection of said flexible curtain in the direction toward the cutterbar under influence of e.g. the air turbulence created by the rotating disc cutter members and/or the rotation of other machine components, is resisted without however hindering the flow of crop material toward the disc cutterbar.

According to the instant invention a harvesting machine is provided comprising:

—a transverse cutterbar mounting transversely spaced, rotatable cutter units having knives connected thereto to sever standing crop by impact upon rotation of the cutter units;

—a flexible curtain supported from a frame member and including at least a transversely extending portion spaced forwardly of the cutterbar; and

—movement restraining means associated with said transverse portion of the flexible curtain and positioned between said portion and the cutterbar to resist movement of that portion of the curtain toward the cutterbar during operation of the harvesting machine;

the machine being characterized in that the movement restraining means:

—extends transversely over at least a substantial length of the transverse portion of the curtain;

—is pivotally mounted for fore-and-aft movement about a generally transverse axis;

—is engageable by said transverse portion of the curtain upon movement thereof in the direction toward the cutterbar; and

—has sufficient mass to resist further movement of said transverse portion of the curtain toward the cutterbar.

Preferably the movement restraining means includes a transversely oriented plate member which is detachably connected to a plurality of transversely spaced hinge members. The hinge members are pivotally connected to brackets supported by the frame member also supporting the flexible curtain. The frame member supporting the flexible curtain also supports a hood which extends rearwardly relative to the transverse portion of the curtain. In an alternative embodiment, the hinge members are pivotally connected to brackets affixed to the hood.

The transverse movement restraining plate member is generally vertically disposed and includes a lower portion that is curved inwardly toward the cutterbar to facilitate the passage of crop material past said member toward the cutterbar. The transverse curtain extends downwardly closer to the ground than the lower portion of the transverse movement restraining plate member.

The movement restraining member has sufficient mass to resist movement of the curtain toward the cutterbar induced by the operative forward movement of the machine and/or by an air flow caused by rotation of the cutter units.

In a preferred embodiment, the movement restraining member is used in a disc mower-conditioner having rotatable conditioning means mounted rearwardly of the cutterbar to condition crop material severed by the cutter units. The movement restraining member, in this combination, has sufficient mass to resist the movement of the transverse portion of the curtain toward the cutterbar induced by said operative forward movement of the harvesting machine and/or by air currents caused by the rotational movement of the cutter units and/or of the conditioning means.

When harvesting large quantities of crop material, the movement restraining means is pivoted rearwardly thus allowing the flexible curtain to move to a position enabling the passage of crop material therebelow. Thus the movement restraining means according to the invention does not hinder the flow of crop material toward the disc cutterbar.

However, in other operating conditions, such as when harvesting light crops, the movement restraining means remains in its generally vertical position thus resisting and restricting the movement of the flexible curtain toward the disc cutterbar which otherwise might be induced by the forward operative movement of the machine and/or by the turbulent air flow from the operation of the cutterbar and eventually of other components of the harvester. Consequently the flexible curtain adequately fulfils its prime objective, i.e. impeding the passage of foreign objects thrown by the disc cutter members in a generally forward direction.

The advantages of this invention will become apparent upon consideration of the following detailed disclosure of the invention, especially when taken in conjunction with the accompanying drawings wherein:

Fig. 1 is a top plan view of a disc mower-conditioner incorporating the principles of the instant invention, a portion of a draft member being broken away;

Fig. 2 is a side elevational view of a disc mower-conditioner seen in Fig. 1 with portions being broken away to better show the invention;

Fig. 3 is an enlarged partial cross-sectional view of the disc mower-conditioner taken along lines 3—3 of Fig. 1; the fore-and-aft movement of the deflector panel being shown in phantom; and

Fig. 4 is a partial cross-sectional view corresponding to lines 4—4 of Fig. 2 and showing a front elevational view of the deflector panel.

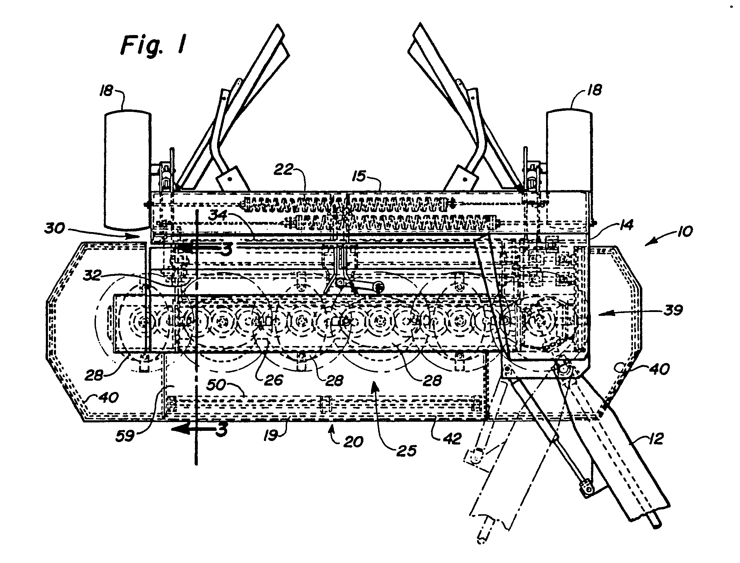

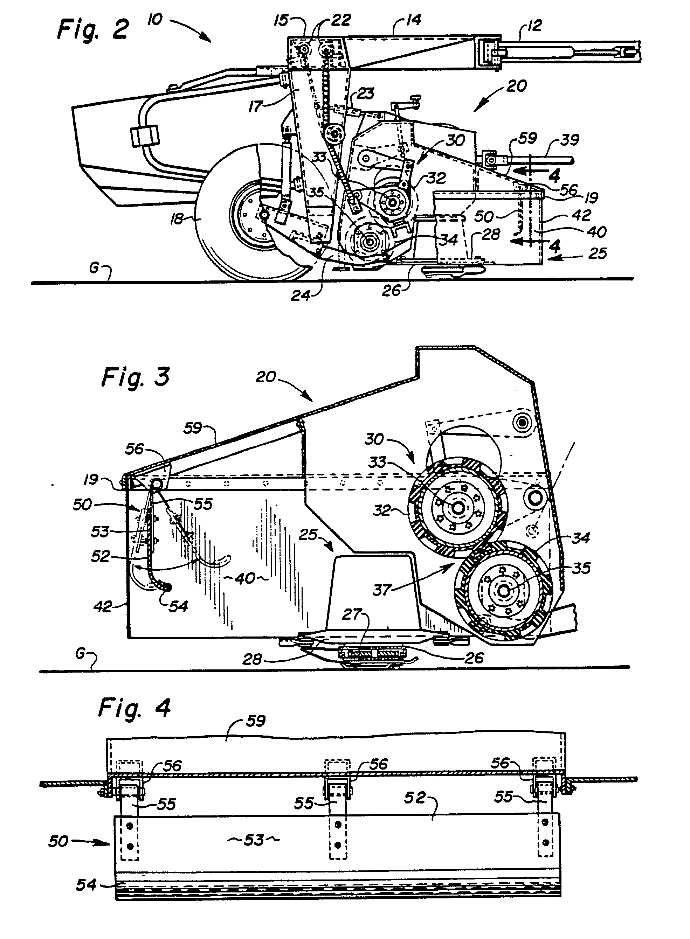

Referring now to the drawings and, particularly, to Fig. 1, a top plan view of a hay harvesting machine, commonly referred to as a disc mower-conditioner, can be seen. Left and right references are used as a matter of convenience and are determined by standing at the rear of the mower-conditioner and facing the direction of travel. The mower-conditioner 10 is shown in the form of a pull-type machine having a draft member 12 pivotally connected to the frame 14 of the machine 10. The frame 14 includes a main transverse support beam 15 to which are connected downwardly depending legs 17 mounting wheels 18 for mobilely supporting the machine 10 over the ground G, as best seen in Fig. 2.

Referring to Figs. 1 and 2, the mower-conditioner 10 includes a crop harvesting header 20 floatingly supported for movement over the ground G relative to the frame 14 by the counterbalancing mechanism 22 and upper and lower links 23, 24 interconnecting the header 20 and the frame 14. The header 20 is provided with a crop cutting mechanism 25. It is possible that the forward operative movement of the mower-conditioner and/or the air flow created by the rotation of the individual disc cutter members 28 and the conditioning rolls 32, 34 will effect a movement of the flexible curtain 40, particularly the transverse portion 42 thereof, toward the disc cutterbar 26. To restrict this movement of the transverse portion 42 of the curtain 40, a movement restraining member in the form of a deflector panel 50 is supported by the subframe member 19 between the disc cutterbar 26 and the transverse portion 42 of the flexible curtain 40 and in the vicinity of the latter. As is best seen in Figs. 3 and 4, the deflector panel 50 comprises a transverse deflecting member 52 detachably connected to a plurality of transversely spaced hinge members 55. Each hinge member 55 is pivotally connected to support brackets 56 affixed to the subframe member 19 so as to permit a generally pivotal movement of the deflector panel 50 in a fore-and-aft direction, as shown in phantom in Fig. 3.

The deflecting member 52 includes an upper portion 53 detachably connected to the hinge members 55 and a curved lower portion 54 depending downwardly below the hinge members 55. As best seen in Fig. 3, the curved lower portion 54 does not extend downwardly toward the ground G as far as the transverse portion 42 of the flexible curtain 40. The curved portion 54 curves inwardly toward the disc cutterbar 26 to facilitate the flow of crop material past the deflector panel 50 to the disc cutter units 28. A hood member 59 is formed as part of the subframe 19 and extends rearwardly from the transverse portion 42 of the curtain 40 over the disc cutterbar 26 to the transverse beam 15. The support brackets 56 are affixed to the hood member 59 adjacent the transverse portion 42.

In operation, the disc mower-conditioner 10 is pulled by a prime mover (not shown) over a field of crop material, such as hay. The standing crop material is swept underneath the transverse portion 42 of the flexible curtain 40 and the deflector panel 50 for presentation to the disc cutterbar 26 so that the disc cutter units 28 can sever the standing crop material. The curved lower portion 54 of the deflecting member 52 and the permissible fore-and-aft pivotal movement of the deflector panel 50 facilitates the passage of standing crop material beneath the deflector panel 50. The deflector panel 50 has suffucient mass to resist any movement of the transverse portion 42 of the flexible curtain 40 toward the cutting mechanism 25 induced by the forward operative movement of the mower-conditioner and/or by air currents created by the rotation of the individual disc cutter units 28 and/or of the conditioning rolls 32, 34. Accordingly, the provision of the deflector panel 50 helps maintain the integrity of the positioning of the flexible curtain 40 around the perimeter of the disc cutterbar 26.

It will be understood that the invention is equally well applicable on all sorts of harvesting machines of the type comprising a disc type cutterbar. The invention thus not only may be used in combination with a disc mower-conditioner as described in the foregoing specification, but instead, it advantageously also may be combined with a plain disc mower, a disc type direct cut attachment for forage harvesters, etc.

## Claims

1. A harvesting machine (10) comprising:
—a transverse cutterbar (26) mounting transversely spaced, rotatable cutter units (28) having knives connected thereto to sever standing crop by impact upon rotation of the cutter units (28);
—a flexible curtain (40) supported from a frame member (19) and including at least a transversely extending portion (42) spaced forwardly of the cutterbar (26); and
—movement restraining means (50) associated with said transverse portion (42) of the flexible curtain (40) and positioned between said portion (42) and the cutterbar (26) to resist movement of that portion (42) of the curtain (40) toward the cutterbar (26) during operation of the harvesting machine, and
characterized in that the movement restraining means (50):
—extends transversely over at least a substantial length of the transverse portion (42) of the curtain (40);
—is pivotally mounted for fore-and-aft movement about a generally transverse axis;
—is engageable by said transverse portion (42) of the curtain (40) upon movement thereof in the direction toward the cutterbar (26); and
—has sufficient mass to resist further movement of said transverse portion (42) of the curtain (40) toward the cutterbar (26).

2. A harvesting machine according to claim 1 characterized in that the movement restraining means (50) includes a transversely oriented plate member (52) detachably connected to a plurality of transversely spaced hinge members (55).

3. A harvesting machine (10) according to claim 2, characterized in that the hinge members (55) are pivotally connected to brackets (56) supported by the frame member (19) also supporting the flexible curtain (40).

4. A harvesting machine (10) according to claim 2, characterized in that the frame member (19) supporting the flexible curtain (40) also supports a hood (59) extending rearwardly relative to the transverse portion (42) of the curtain (40); the hinge members (55) being pivotally connected to brackets (56) affixed to said hood (59).

5. A harvesting machine (10) according to any of the claims 2 to 4, characterized in that the transverse movement restraining plate member (52) is generally vertically disposed and includes a lower portion (54) that is curved inwardly toward the cutterbar (26) to facilitate the passage of crop material past said member (52) toward the cutterbar (26).

6. A harvesting machine (10) according to claim 5, characterized in that the transverse portion (42) of the curtain (40) extends downwardly closer the ground (G) than the lower portion (54) of the transverse movement restraining plate member (52).

7. A harvesting machine (10) according to any of the preceding claims, characterized in that conditioning means (32, 34) are mounted rearwardly of the cutterbar (26) to condition crop material severed by the cutter units (28), and in that the movement restraining means (50) has sufficient mass to resist the movement of the transverse portion (42) of the curtain (40) toward the cutterbar (26) induced by the operative forward movement of the harvesting machine and/or by air currents caused by the rotational movement of the cutter units (28) and/or the conditioning means (32, 34).

## Patentansprüche

1. Erntemaschine (10) mit:
—einem querverlaufenden Mähbalken (26), der mit Querabstand angeordnete drehbare Schneideinheiten (28) aufweist, mit denen zum Messer zum Abtrennen von stehendem Erntematerial durch Auftreffen bei einer Drehung der Schneideinheiten (28) verbunden sind,
—einem flexiblen Vorhang (40), der von einem Rahmenteil (19) gehaltert ist und zumindestens einen querverlaufenden Teil (42) einschließt, der mit Abstand vor dem Mähbalken (26) angeordnet ist, und
—mit Bewegungsbegrenzungseinrichtungen (50), die dem querverlaufenden Teil (42) des flexiblen Vorhanges (40) zugeordnet und zwischen diesem Teil (42) und dem Mähbalken (26) angeordnet sind, um einer Bewegung dieses Teils (42) des Vorhanges (40) in Richtung auf den Mähbalken (26) während des Betriebes der Erntemaschine Widerstand entgegenzusetzen, dadurch gekennzeichnet, daß die Bewegungsbegrenzungseinrichtungen (50):
—sich in Querrichtung über zumindestens eine beträchtliche Länge des querverlaufenden Teils (42) des Vorhanges (40) erstrecken,
—schwenkbar für eine Bewegung in Vorwärts- und Rückwärtsrichtung um eine allgemein querverlaufende Achse befestigt sind,
—mit dem querverlaufenden Teil (42) des Vorhanges (40) bei dessen Bewegung in Richtung auf den Mähbalken (42) in Eingriff bringbar sind, und eine ausreichende Masse aufweisen, um einer weiteren Bewegung des querverlaufenden Teils (42) des Vorhanges (40) in Richtung auf den Mähbalken Widerstand entgegenzusetzen.

2. Erntemaschine nach Anspruch 1, dadurch gekennzeichnet, daß die Bewegungsbeschränkungseinrichtungen (50) ein in Querrichtung ausgerichtetes Plattenteil (52) einschließen, das lösbar mit einer Vielzahl von mit Querabstand angeordneten Scharnierteilen (55) verbunden ist.

3. Erntemaschine (10) nach Anspruch 2, dadurch gekennzeichnet, daß die Scharnierteile (55) schwenkbar an Haltearmen (56) befestigt sind, die an dem Rahmenteil (19) befestigt sind, das weiterhin den flexiblen Vorhang (40) haltert.

4. Erntemaschine (10) nach Anspruch 2, dadurch gekennzeichnet, daß der den flexiblen Vorhang (40) halternde Rahmenteil weiterhin eine Haube (59) haltert, die sich bezüglich des querverlaufenden Teils (42) des Vorhanges (40) nach hinten erstreckt, und daß die Scharnierteile (55) schwenkbar mit Haltearmen (56) verbunden sind, die an der Haube (59) befestigt sind.

5. Erntemaschine (10) nach einem der Ansprüche 2—4, dadurch gekennzeichnet, daß das querverlaufende, die Bewegung beschränkende Plattenteil (52) allgemein vertikal angeordnet ist und einen unteren Teil (44) einschließt, der nach innen in Richtung auf den Mähbalken (26) gekrümmt ist, um das Vorbeilaufen von Erntematerial an dem Plattenteil (52) vorbei in Richtung auf den Mähbalken (26) zu erleichtern.

6. Erntemaschine (10) nach Anspruch 5, dadurch gekennzeichnet, daß sich der querverlaufende Teil (42) des Vorhanges (40) nach unten hin näher bis zum Boden (G) erstreckt, als der untere Teil (54) des querverlaufenden, die Bewegung beschränkenden Plattenteils (52).

7. Erntemaschine (10) nach einem der vorhergehenden Ansprüche, dadurch gekennzeichnet, daß Aufbereitungseinrichtungen (32, 34) hinter dem Mähbalken (26) zur Aufbereitung von von den Schneideinheiten (28) geschnittenen Erntematerial befestigt sind, und daß die Bewegungsbeschränkungseinrichtungen (50) eine ausreichende Masse aufweisen, um derjenigen Bewegung des querverlaufenden Teils (42) des Vorhanges (40) in Richtung auf den Mähbalken (26) Widerstand entgegenzusetzen, die durch die betriebsmäßige Vorwärtsbewegung der Erntemaschine und/oder durch Luftströme hervorgerufen wird, die durch die Drehbewegung der Schneideinheiten (28) und/oder der Aufbereitungseinrichtungen (32, 34) entstehen.

## Revendications

1. Moissonneuse (10) comportant:

—une barre de coupe reansversale (26) supportant des organes de coupe mobiles en rotation (28) espacés transversalement et pourvus de couteaux montés sur eux pour séparer une récolte sur pied en la percutant lors d'une rotation des organes de coupe (28);

—un rideau flexible (40) supporté à partir d'un élément d'armature (19) et dont au moins une partie (42) s'étendant transversalement, est espacée vers l'avant par rapport à la barre de coupe (26); et

—un moyen limiteur de déplacement (50) associé à ladite partie transversale (42) du rideau flexible (40) et positionné entre ladite partie (42) et la barre de coupe (26), afin d'opposer une résistance à un déplacement de cette partie (42) du rideau (40) en direction de la barre de coupe (26), en cours de fonctionnement de la moissonneuse, et

caractérisée en ce que le moyen limiteur de déplacement (50):

—s'étend transversalement au moins sur une longueur substantielle de la partie transversale (42) du rideau (40);

—est monté à pivotement en vue d'un déplacement d'avant en arrière autour d'un axe sensiblement transversal;

—est conçu pour que ladite partie transversale (42) du rideau (40) vienne en contact avec lui, lors d'un déplacement de celle-ci dans la direction orientée vers la barre de coupe (26); et

—possède une masse suffisante pour opposer une résistance à une continuation du déplacement de ladite partie transversale (42) du rideau (40) en direction de la barre de coupe (26).

2. Moissonneuse selon la revendication 1, caractérisée en ce que le moyen limiteur de déplacement (50) comporte un élément formant plaque (52) orienté transversalement et accouplé d'une manière détachable avec plusieurs organes formant charnières (55) espacés transversalement.

3. Moissonneuse (10) selon la revendication 2, caractérisée en ce que les organes formant charnières (55) sont reliés à pivotement à des pattes (56) supportées par l'élément d'armature (19) qui supporte également le rideau flexible (40).

4. Moissonneuse (10) selon la revendication 2, caractérisée en ce que l'élément d'armature (19) supportant le rideau flexible (40) supporte également un capot (59) qui s'étend vers l'arrière par rapport à la partie transversale (42) du rideau (40); les organes formant charnières (55) étant reliés à pivotement à des pattes (56) fixées audit capot (59).

5. Moissonneuse (10) selon l'une quelconque des revendications 2 à 4, caractérisée en ce que l'organe formant plaque limiteuse de déplacement transversale (52) est disposé sensiblement verticalement et comprend une partie inférieure (54) courbée vers l'intérieur en direction de la barre de coupe (26) pour faciliter le passage des produits de récolte devant ledit organe (52) en direction de la barre de coupe (26).

6. Moissonneuse (10) selon la revendication 5, caractérisée en ce que la partie transversale (42) du rideau (40) s'étend vers le bas plus près du sol que la partie inférieure (54) de l'organe formant plaque limiteuse de déplacement transversale (52).

7. Moissonneuse (10) selon l'une quelconque des revendications précédentes, caractérisée en ce que des moyens conditionneurs (32, 34) sont montés en arrière de la barre de coupe (26) pour conditionner des produits de récolte séparés par les organes de coupe (28), et en ce que le moyen limiteur de déplacement (50) possède une masse suffisante pour opposer une résistance au déplacement de la partie transversale (42) du rideau (40) en direction de la barre de coupe (26), déplacement induit par le mouvement d'avancement fonctionnel de la moissonneuse et/ou par des courants d'air dûs au mouvement de rotation des organes de coupe (28) et/ou des moyens conditionneurs (32, 34).

# Fig. 1

Fig. 2

Fig. 3

Fig. 4